# EUROPEAN PATENT APPLICATION

(11) **EP 2 587 167 A1**
(43) Date of publication of application: **01.05.2013**
(21) Application number: 12188509.9
(22) Date of filing: 15.10.2012
(51) Int. Cl.: F24C 15/16, A47J 37/04

(54) **A cooking device**

(30) Priority: 28.10.2011 TR 201110760
(71) Applicant: Vestel Beyaz Esya Sanayi ve Ticaret A.S., 45030 Manisa (TR)
(72) Inventor: Eryilmaz, Hasan, 35150 Izmir (TR)
(74) Representative: Cayli, Hülya

(57) **Abstract**

The cooking device (C) of the present invention comprises at least one cooking compartment (B) in which the food to be cooked or heated is placed, and at least one movement element and further comprises at least one shaft (M) which can be positioned inside the cooking compartment (B) and can be engaged to the movement element; at least one grill (G) which comprises a slot (Y) suitable for inserting the shaft (M) and can rotate inside the cooking compartment (B) thanks to the motional energy the shaft (M) receives from the movement element, and which is suitable for placing the foods desired to be cooked so as not to fall. Therefore, while the cooking device (C) is used together with the grill (G), it can be ensured that more than one food is cooked at the same time by using more than one grill and/or carrier element.

## Description

### Technical Field

The present invention relates to a cooking device comprising a grill.

### Prior Art

The cooking devices commonly used nowadays can comprise a grill on which foods desired to be cooked are placed and a cooking compartment suitable for positioning this grill inside the cooking device. The foods desired to be cooked are ensured to be cooked by being placed on the grill horizontally.

These grills used in the cooking devices are generally in uniform structure and can be used by either being fixed inside the cooking device or being removably insertable into the cooking compartment. When these grills are in fixed position inside the cooking compartment, all of the food cannot be cooked in the same way since the heat distribution cannot be same on the foods cooked in the fixed grill. Besides, when the food is placed on said grill and positioned inside the cooking device, since the position of the grill is fixed, the user cannot observe all surfaces of the food during the cooking. Thus, the user needs cannot be met sufficiently.

The patent document no EP 0491437 A2 of the state of the art discloses a grill comprising at least one grill plate for cooking the foods placed thereon and at least one electrical connection member used for being able to heat this grill plate. Said grill is removably insertable into a traditional oven easily. However, the grill described in the document cannot meet the user needs sufficiently since it is positioned inside the oven in a fixed manner.

### Brief Description of the Invention

The cooking device of the present invention comprises at least one cooking compartment in which the food to be cooked or heated is placed, and at least one movement element and further comprises at least one shaft which can be positioned inside the cooking compartment and is able to be engaged to the movement element; at least one grill which comprises a slot suitable for inserting the shaft into it and is able to rotate inside the cooking compartment thanks to the motional energy the shaft receives from the movement element, and which is suitable for placing the foods desired to be cooked so as not to fall.

Since the grill comprised by the cooking device of the present invention is removably insertable, the device can be used both as a cooking device comprising grill and as a traditional cooking device. Moreover, more than one grill and/or carrier element can be used inside the cooking compartment and more than one food is ensured to be cooked at the same time.

### Objectives of the Invention

An aim of the invention is to develop a cooking device comprising a rotatable grill.

The other aim of the invention is to develop a cooking device which can operate as a traditional oven.

Another aim of the invention is to develop a cooking device comprising a removably insertable grill.

A further aim of the invention is to develop a cost effective, practical and reliable cooking device.

### Description of the Drawings

The exemplary embodiments of the cooking device of the invention are shown in attached drawings wherein;
Figure 1 is a view of a grill used in the cooking device.
Figure 2 is another view of the grill used in the cooking device.
Figure 3 is perspective view of the cooking device.

The parts in figures are individually enumerated and corresponding terms of reference numbers are given as follows:
- Cooking compartment: (B)
- Wall: (B1)
- Channel: (B2)
- Cooking device: (C)
- Body: (C1)
- Support element: (D)
- Grill: (G)
- Shaft: (M)
- Slot: (Y)
- Shaft support: (Y1)
- Connection element: (1)

### Description of the Invention

The grills used for cooking foods are fixed generally in a cooking compartment of the cooking device by being placed in the channels provided in the side walls of the cooking device. However, since said grills are in fixed position, both the heat emitted by the cooking device cannot penetrate into the food equally and the user cannot observe all surfaces of the food positioned on the grid during the cooking. Therefore, the user needs cannot be met efficiently.

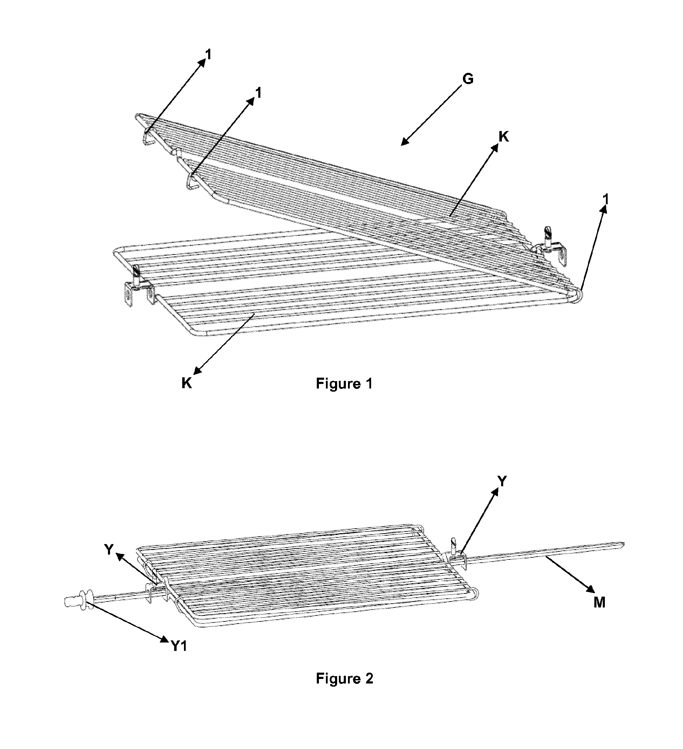

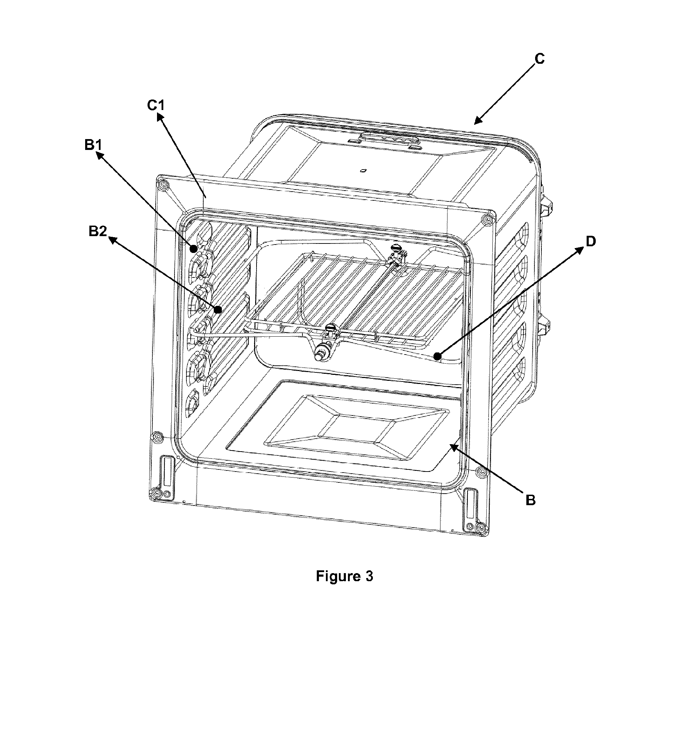

The cooking device (C), whose exemplary embodiment is shown in figure 1-3, comprises at least one cooking compartment (B); at least one movement element (not shown in figures) which can preferably be a motor; at least one shaft (M) engegeable to the movement element; at least one grill (G) which comprises a slot (Y) suitable for inserting the shaft (M) and which is able to rotate inside the cooking compartment (B) thanks to the motional energy the shaft (M) receives from the movement element, and which is suitable for placing the foods desired to be cooked so as not to fall. When the shaft (M) is inserted to said slot (Y), since is the shaft (M) is connected to the movement element, the shaft (M) transfers the motional energy to the grill (G); and the grill comprising preferably one or more rods is able to rotate inside the cooking compartment. The rotation angle can be 360 degree or 180 degree according to the cooking program selected by the user. Thus, a homogenous cooking can be done by ensuring that all of the food placed on the grill receives equal heat. Besides, the user can observe all surfaces of the food thanks to the rotatable grill (G). The grill (G) is able to be positioned inside a traditional cooking device (e.g. an oven) thanks to the shaft without needing any customizing.

In the cooking device (C) of the present invention, the shaft (M) can easily inserted in the grill (G) and removed from the grill (G) thanks to the slot (Y). Therefore, the grill (G) is able to be removed from the cooking device (C) if not necessary and the cooking compartment (B) can be used efficiently.

In an alternative embodiment of the present invention, the grill (G) comprises at least two wings (K), at least one of which is connected to at least one another. At least one connection element (1) comprising preferably a snap is engaged to at least one side of these wings (K) so as to connect the wings to each other. Therefore, when the connection element (1) is engaged to the wings (K), the wings (K) can be opened and closed by moving at the axis of the side to which the connection element (1) is engaged such that foods can be placed between the wings (K). Preferably, at least one another connection element (1) is engaged to another side to which the connection element (1) ensuring opening and closing of the wings (K) is not engaged; and prevents movement of the wings (K) with respect to one another. Therefore, when the food desired to be cooked is placed between these wings (K), said food is jammed between these wings (K), and the movement of the food with respect to the grill (G) during cooking is able to be prevented.

In a preferred embodiment of the invention, the cooking device (C) comprises at least one support element (D) which is suitable for placing an end of the shaft (M), the other end of which is inserted into the movement element. Said end of the shaft (M) is inserted in at least one shaft support (Y1) comprised by the device (C) and then positioned on the support element (D). Therefore, since the other end of the shaft (M), which is not connected with the movement element, is placed in the shaft support (Y1) and on the support element (D), the shaft (M) is able to rotate easily while the movement element rotates the shaft (M). Moreover, placement of an end of the shaft (M) not connected with the movement element on the support element (D) ensures safe cooking of the foods.

In an alternative embodiment of the invention, said support element (D) is in a structure that is able to be inserted into at least one channel (B2) provided on at least one wall (B1) located inside the cooking compartment (B) of the cooking device (C). When the shaft (M) is engaged to the movement element, the support element (D) preferably in the wire form is placed inside the cooking compartment (B) so as to support the shaft (M). The shaft (M) whose movement is supported such that can rotate safely inside the cooking compartment (B).

The cooking device (S) of the present invention allows for positioning another carrier element (e.g. a tray) in another channel (B2) provided inside the cooking compartment (B) even if the grill (G) is positioned inside the cooking compartment. Accordingly, a number of carrier elements such as grill and tray can be positioned in the cooking device (C) and it is ensured that more than one food is ensured to be cooked at the same time.

The cooking device (C) of the present invention is able to be used both as a cooking device (C) comprising a rotatable grill (G) and a traditional cooking device (C). Moreover, while the cooking device (C) is used together with the grill (G), it can be ensured that more than one food is cooked at the same time by using more than one grill and/or carrier element. Therefore, a cooking device (C) meeting user needs can be developed.

## Claims

1. A cooking device (C) comprising at least one cooking compartment (B) in which the food to be cooked or heated is placed and at least one movement element **characterized by** comprising
- at least one shaft (M) which is able to be positioned inside the cooking compartment (B) and is able to be be engaged to the movement element;
- at least one grill (G) which comprises a slot (Y) suitable for inserting the shaft (M) and is able to rotate inside the cooking compartment (B) thanks to the motional energy the shaft (M) receives from the movement element, and which is suitable for placing the foods desired to be cooked so as not to fall.

2. A cooking device (C) according to claim 1 **characterized in that** said grill (G) comprises one or more rods.

3. A cooking device (C) according to claim 1 **characterized in that** said movement element is a motor.

4. A cooking device (C) according to claim 1 **characterized in that** said grill (G) is a 180 degree rotatable grill (G).

5. A cooking device (C) according to claim 1 **characterized in that** said grill (G) is a 360 degree rotatable grill (G).

6. A cooking device (C) according to claim 1 **characterized in that** said grill (G) is removably insertable into the cooking device (C).

7. A cooking device (C) according to claim 1 **characterized in that** said grill (G) comprises at least two wings (K) at least one of which is connected to at least one another.

8. A cooking device (C) according to claim 7 **characterized by** comprising at least one connection element (1) which is able to be engaged to at least one side of the wings (K) and by which the wings (K) can be opened and closed such that foods is able to be placed between the wings (K).

9. A cooking device (C) according to claim 8 **characterized by** comprising at least one another connection element (1) which is engaged to another side to which said connection element (1) ensuring opening and closing of the wings (K) is not engaged so as to prevent movement of the wings (K) with respect to one another.

10. A cooking device (C) according to claim 8 or 9 **characterized in that** said connection element (1) comprises at least one snap.

11. A cooking device (C) according to claim 1 **characterized by** comprising at least one support element (D) which is suitable for placing an end of the shaft (M), the other end of which is inserted into the movement element.

12. A cooking device (C) according to claim 11 **characterized by** comprising at least one channel (B2) which is provided on at least one wall (B1) located inside the cooking compartment (B) and which is suitable for inserting said support element (D).

13. A cooking device (C) according to claim 11 **characterized in that** said support element (D) is in the wire form.

14. A cooking device (C) according to claim 11 **characterized in that** said shaft (M) comprises at least one shaft support (Y1) which is able to be inserted into the end of the shaft (M) placed in the support element (D).
